# EUROPEAN PATENT APPLICATION

(11) **EP 4 570 444 A1**
(43) Date of publication of application: **18.06.2025**
(21) Application number: 23216259.4
(22) Date of filing: 13.12.2023
(51) Int. Cl.: B25J 9/00, B25J 9/16, G06Q 10/087

(54) **A SYSTEM FOR HANDLING FOOD ITEMS AND METHOD FOR TRANSPORTING AND SORTING FOOD ITEMS**

(71) Applicant: Kitopi One SPV Limited, Abu Dhabi (AE)
(72) Inventor: Carstens, Ricky Valdemar, 8700 Horsens (DK); Hahn Kristensen, Rune, 5370 Mesinge (DK)
(74) Representative: Patrade A/S

(57) **Abstract**

The present invention relates to a system (100) for handling one or more associated food item(s) (200) with an associated ID (300), such as a packaging comprising food, said system (100) comprising: a reader, such as a scanner, configured for reading the ID of the food item, a conveyor (400) for transporting the associated food item (200) to a temporary storage area (500), a temporary storage area (500), a sensor (600), a vision system (700) for capturing information from the storage area (500), a package area (800), a robotic arm (900) for repositioning the food item (200) from the storage area (500) to the package area (800) and/or the package object, a control system for controlling the robotic arm (900) based on input from at least the vision system (700).

Furthermore, the invention relates to a method for handling food items.

## Description

### FIELD OF THE INVENTION

The present invention relates to a system for handling one or more associated food item(s) with an associated ID, such as a packaging comprising food, said system comprising: a reader, such as a scanner, configured for reading the ID of the food item, a conveyor, preferably a plurality of conveyors, for transporting the associated food item to a temporary storage area, a temporary storage area, preferably being a rotatable table, preferably circular, a sensor, preferably positioned at an arbitrary position along the conveyor, such as a photocell, a vision system, such as a vision camara, for capturing information from the storage area, a package area, such as a tray, and/or a package object, such as a bag, a robotic arm for repositioning the food item from the storage area to the package area and/or the package object, a control system, for controlling the robotic arm based on input from at least the vision system, preferably also inputs from a controller.

Furthermore, the invention relates to a method for transporting and sorting food items.

### BACKGROUND OF THE INVENTION

Within the area of food handling, numerous solutions are known, and numerous systems for online food ordering, handling the online food order and delivering the food are available.

However, none of the systems provide the opportunity to automatically handle food items from the production of the food to a gathered order via food item IDs, and further wherein it is possible for orders from different kitchens and/or brands to be collected into one order.

Today, when ordering food online from different kitchens and/or brands, such as ordering a pizza from one brand/kitchen, a burger from a second brand/kitchen, a salad from a third brand/kitchen and so on, it is only possible to have all the desired food items from different brands/kitchens by placing more than one order, it is not possible to only place one order.

The different orders would not in any way be connected to each other, and, as an example, a first order may be ready to collect or for delivery after 10 min., a second order after 25 min., and a third order after 45 min. This is very inconvenient as the food from the first order may be e.g. cold before the order from the last order is ready.

It is today not possible to have food items from different brands/kitchens made in one gathered order.

Hence, an improved system for handling one or more associated food item(s) and further an improved method for handling food items would be advantageous.

### OBJECT OF THE INVENTION

It is an object of the present invention to provide an alternative to the prior art.

In particular, it may be seen as an object of the present invention to provide a system and a method for handling one or more associated food item(s) that solve the above-mentioned problems.

### DESCRIPTION OF THE INVENTION

Thus, the above-described object and several other objects are intended to be obtained in a first aspect of the invention by providing a system for handling one or more associated food item(s) with an associated ID, such as a packaging comprising food, said system comprising:
- a reader, such as a scanner, configured for reading the ID of the food item,
- a conveyor, preferably a plurality of conveyors, for transporting the associated food item to a temporary storage area,
- a temporary storage area, preferably being a rotatable table, preferably circular,
- a sensor, preferably positioned at an arbitrary position along the conveyor, such as a photocell,
- a vision system, such as a vision camara, for capturing information from the storage area,
- a package area, such as a tray, and/or or a package object, such as a bag,
- a robotic arm for repositioning the food item from the storage area to the package area and/or the package object,
- a control system, for controlling the robotic arm based on input from at least the vision system, preferably also inputs from a controller.

The invention is particularly, but not exclusively, advantageous for providing a system wherein food items from numerous different brands/kitchens can be placed and gathered in one order.

The system is a fully automated system from when the food order is placed by a customer/consumer to when the food order is ready for delivery in one gathered order/delivery. The food may be automatically prepared, such as cooked and/or made by robots, however, manual preparing/cooking is preferred.

It should be understood that the consumer/customer of the system may place their orders through a number of different software and platforms, such as an app.

In the context of the present invention, it should be understood that "food item" is a food packaging, such as a box, a bowl, paper/wrap, or any desired packaging for food, wherein the packaging comprises a prepared/cooked food product, such as a burger, pizza, salad, sandwich, or any food placed in an order.

In the context of the present invention, it should be understood that "ID" can be various IDs, such as a bar code, a matrix code, a QR code, Radio Frequency ID, etc. The invention should not be limited to a specific type of ID.

The ID of the invention may at least be representing or comprising information about the food item, such as the type of food packaging and/or the dimensions of the food packaging.

Furthermore, the ID may comprise information on the material of the food packaging, the weight of the packaging and/or the food product in the packaging, information about the food product in the packaging, such as if the product is a warm, a cold or a frozen product and/or the texture of the food product, such as if the product is solid, fluid, hard, soft, etc.

The reader, such as a scanner, is configured for reading the ID of the food item when the food item is prepared and thereby ready (such as for pick-up or delivery). The scanner provides the opportunity to make a connection of the different food items and the gathered order, and thereby knowing when the full order is ready.

The at least one conveyor of preferably a plurality of conveyors in the system provides an easy, efficient and reliable transportation/distribution/movement of the associated food item, when the food product is prepared and positioned into a packaging, such as a box, a bowl, paper/wrap, etc., and should be moved from the kitchens to allow new food products to be prepared in the kitchens.

The temporary storage area, preferably being a rotatable table, and preferably circular, provides an area wherein the food being prepared and ready for being packed into orders can temporarily be stored while the rest of the order is prepared. Thereby, instead of having food stored in the kitchens and occupy space in the kitchens, the food items can temporarily be stored on this area. Also, the area makes it possible to easily sort several food items into different orders.

The sensor, such as a photocell, provides information on a food item before it enters the storage area, and thereby provides a system which only requires an extremely small temporary storage area compared to the amount of food items being handled in the system. It should be understood that the system can include a plurality of sensors, however, at least one sensor.

The vision system, such as a vision camera, provides the possibility of capturing information on the food items positioned at the storage area. The food items are each provided with an ID, and the vision system is at least capable of obtaining information from these different IDs and thereby automatically collect and sort the items into the right gathered order. The system may also be able to obtain information on the food item, such as shape and dimensions without the ID.

In the context of the present invention, it should be understood that the vision system may be both a 2D and/or 3D vision system. The robotic arm provides the opportunity to automatically reposition the food item from a storage area to the package area and/or the package object and automatically collect and sort the food item into a finished order.

It should be understood that "robotic arm" might be an end of arm tooling or the like.

The package area may be the final area/destination of the system, wherein an order is collected into one gathered order comprising one or more food items.

The control system provides at least the controlling of the robotic arm, such that the orders can be correctly collected and sorted into one gathered order. The control system is based on input from at least the vision system. Preferably, the control system would also be provided with inputs from the scanner and/or the sensor and/or other relevant elements connected to the system.

It should be understood that the control system may comprise a controller.

In one embodiment of the invention, the ID is a machine-readable representation of information, such as a bar code, a matrix code, a QR code, Radio Frequency ID, preferably being a pre-printed label.

The embodiment is particularly, but not exclusively, advantageous for proving an ID which is easy to provide on the food items, and furthermore is easy and economical to manufacture and pre-print.

In one embodiment of the invention, the system further comprises a cooking area for preparing the one or more associated food items.

The embodiment is particularly, but not exclusively, advantageous for providing an area for preparing the food such as cooking and/or making food.

It should be understood that "cooking" may also include preparing any type of food.

In one embodiment of the invention, the information represented in the ID is at least:
- height, width, and length of the associated food item, and/or
- an indication of an order number of the associated food item.

The embodiment is particularly, but not exclusively, advantageous for providing the possibility of obtaining information on the food item to which the ID is connected, such as positioned on the food item as a label. The ID information enables the system via the robot arm to collect and sort the items into a gathered order.

In one embodiment of the invention, the vision system, when in use, is configured for capturing information on at least:
- the ID of the associated food item,
- the gripping position of the associated food item on the storage area.

The embodiment is particularly, but not exclusively, advantageous for providing a system, wherein the repositioning of a food item is performed most optimally, such that the food product in the food packaging is not damaged.

The vision system may perform the best possible gripping position by identifying the center position of the surface of the food item. When determining the center position, the X and Y (surface dimensions) positions are determined and preferably also the Z (height) position and the rotation/angle of the food item are determined.

This will provide optimal information for the system, such that the robotic arm can grip/collect the food item correctly.

If the vision system is a 2D system, the vision camera determines the surface dimensions X and Y. The Z dimension, being the height, is obtained through the ID, which comprises information stored in a database about the dimensions of the food item/food packaging.

If the vision system is a 3D system, the vision camera determines both the surface dimensions X and Y and the Z dimension being the height of the food item and further also the rotation/angle of the item.

The vision of the vision system may focus on the entire storage area or may only focus on part of the area.

When a food item enters the storage area from the conveyor, it is detected by the vision system. If the storage area is rotating, such as a rotating table, it is registered how much the table rotates via signals from the table, such that the system registers the movement of the item, and such that the robotic arm can easily be controlled according to where on the storage area it must grip for the item.

In one embodiment of the invention, the sensor, when in use, is providing:
- information on at least the width and length of the food item, and
- a control signal based on the width and length for controlling the position, such as the entering position, of the food item on the temporary storage area.

The embodiment is particularly, but not exclusively, advantageous for deciding where on the temporary storage area the food item should be entered, such as entering position, and thereby substantially deciding the position of the food item on the temporary storage area.

In the context of the present invention "entering position" may be understood as the position of the outer edge of the table when the food item enters the table, preferably from a conveyor.

In one embodiment of the invention, the conveyor comprises a slide positioned at the end towards the storage area for guiding the associated food item to the storage area.

The embodiment is particularly, but not exclusively, advantageous for providing an effective and safe entering of the food item into the storage area.

In one embodiment of the invention, the system further comprises a database, and wherein the data stored in the database is provided from at least one of, preferably all of:
- the scanner,
- the sensor, and/or
- the vision system.

The embodiment is particularly, but not exclusively, advantageous for obtaining a database with information usable for optimizing the performance of a system and the parts/areas of the system.

It should be understood that the control system is configured to transmit data to a database and to receive data from a database, said data preferably being provided from one or more of the scanners, the sensor, the vision system.

In one embodiment of the invention, the storage area, when in use, is rotating:
- continuously, or
- periodically, such as rotating when preparing for a food item to enter the storage area from the conveyor, such as when receiving a control signal.

In one embodiment of the invention, the robotic arm is configured for gripping the food item on the storage area, preferably by using vacuum, such as using at least one suction cup and/or mechanical gripper.

The embodiment is particularly, but not exclusively, advantageous for providing a robotic arm that is optimal for gripping all kinds of food items without damaging neither the food item, nor the packaging, nor the food product in the packaging.

In one embodiment of the invention, the robotic arm is a part of a robot picking assembly for picking up at least one associated food item, such as packaging comprising food, the robot picking assembly comprising:
- a robotic arm; said robotic arm comprising:
   - an elongated cylindrical chamber,
   - at least two internal air channels, a first and a second internal air channel, such as pipes or tubes,
   - at least two air suction connections, a first and a second air suction connection,
   - at least two vacuum fittings, a first and a second vacuum fitting,
   - at least two suction cups;
      - an inner suction cup, being the smallest suction cup, and
      - an outer suction cup, being the biggest suction cup,
         said suction cups being positioned at the distal end of the robotic arm and being configured to be arranged in contact with the associated food items to pick up and release associated food items,

wherein the inner suction cup is concentrically positioned inside the outer suction cup, wherein a first internal air channel is connected to the inner suction cup by a first vacuum fitting and a second internal air channel is connected to the outer suction cup by a second vacuum fitting,
wherein a first internal air channel is connected to a first air suction connection and a second internal air channel is connected to a second air suction connection, and
wherein the air suction connections are positioned at the proximal end of the chamber.

The invention is particularly, but not exclusively, advantageous for providing an assembly for automatic pick up of food items and is capable of lifting and handling a great amount of different and varying food items.

Furthermore, the assembly fits into more or less any order package, such as a bag, since the robot assembly has an elongated robot arm with a smooth surface without protrusions.

Also, the position of the air suction connections provides an advantage, since the connections do not damage the bag when positioning the food in the bag.

Preferably, the assembly is a fully automated robot picking assembly.

In one embodiment of the invention, the system comprises at least two conveyors and at least two storage areas, the plurality of conveyors and storage areas being controlled by the same control system.

The embodiment is particularly, but not exclusively, advantageous for providing a system suitable for being easily expanded if needed.

In one embodiment of the invention, the one or more food items are sorted into one gathered order at a package area or in a package object, wherein the ID of the food item(s) provides the information on when an order is completed.

In one embodiment of the invention, the system allows for identification of a food item that is oversized relative to the package area or package bag, preferably said oversized food item is being handled manually.

The embodiment is particularly, but not exclusively, advantageous for identifying that a food item is too big - oversized - to fit into or onto the package area, such as a tray, and/or or a package object, such as a bag.

The oversized food item can be identified by one or more of: the scanner via the ID information, the sensor and/or the vision system.

The oversized food item may be sorted out before entering the temporary storage area, or the oversized food item may enter the storage area and then be sorted out from the storage area.

The oversized food item can be handled by the robotic arm but is preferably handled manually.

In one embodiment of the invention, the system comprises a separate area for cold food items, such as beverages, dressings, ice cream, and wherein the at least one robotic arm is configured for gripping the cold food item, and
preferably the separate area also comprises extra items, such as disposable cutlery.

The embodiment is particularly, but not exclusively, advantageous for providing a system wherein all types of food or liquid or other food/eating related items can be handled.

In one embodiment of the invention, the system comprises an algorithm adapted to provide a position command for positioning the food item on the storage area based on a control signal of the sensor.

The embodiment is particularly, but not exclusively, advantageous for obtaining a fully automated system providing optimal performance.

In one embodiment of the invention, the system comprises an algorithm adapted to provide a sorting command of the associated food items based on order information from the ID.

The embodiment is particularly, but not exclusively, advantageous for providing a sorting of the food items, wherein the sorting is not random, but is a sorting that is the optimal sorting, such as warm food is positioned strategically away from the cold food.

Based on ID information the most suitable packaging sequence for any specific order can be obtained.

In one embodiment of the invention, the algorithm is a machine learning algorithm adapted to be trained from the collected data of the database.

The embodiment is particularly, but not exclusively, advantageous for proving a system, wherein the performance of the system is optimized for any order performed.

In a second aspect, the invention further relates to a method of handling one or more associated food item(s), said method comprising the steps of:
- receiving an order of one or more food item(s),
- providing an order number for the order,
- scanning an ID of the food item, such as a bar code, a matrix code, a QR code, Radio Frequency ID, and providing information from the ID being at least:
   - height, width, and length of the food item, and/or
   - an indication of an order number of the food item,
- linking the information to the food item, such as providing a label on the food item,
- positioning the food item on a conveyor for transporting the food item,
- providing the dimensions of width and length of the food item from a sensor,
- providing a control signal based on information from the sensor, such as the width and length of the product,
- rotating a temporary storage area, preferably being a rotatable table,
- positioning the food item on the storage area,
- reading the ID of the associated food item by a vision system,
- providing the gripping position of the associated food item on the storage area by a vision system,
- gripping the food items from the storage area, preferably by a robotic arm,
- sorting the food items into a package area and/or a package object,
- completing the order by sorting all of the one or more food items received in the order into a package area and/or a package object.

The second aspect of the invention is particularly, but not exclusively, advantageous for providing a manufacturing method for providing a method wherein food items from numerous different brands/kitchens can be placed and gathered in one order.

The method is fully automated from the moment the food order is placed by a customer/consumer until the food order is ready for delivery in one gathered order/delivery.

In one embodiment of the invention, the method further comprises:
- preparing the food in at least one cooking area,
- packing the prepared food into food packaging.

In one embodiment of the invention, the sorting is performed automatically by a robotic arm comprising at least one suction cup and/or mechanical gripper.

The embodiment is particularly, but not exclusively, advantageous for providing a fully automated system.

In one embodiment of the invention, the method further allows for identification of a food item being oversized relative to the package area or package bag. Said oversized food item is therefore being handled manually.

In one embodiment of the invention, the method further comprises the step of:
- storing information provided by the scanning in a database,
- storing information provided by the sensor in a database, and/or
- storing information provided by the vision system in a database.

The embodiment is particularly, but not exclusively, advantageous for obtaining a database with information usable for optimizing the performance of a system and the parts/areas of the system.

In one embodiment of the invention, an algorithm is provided in a control system for:
- determining a position of the food item on the storage area,
- determining a gripping approach of the food item, and/or
- determining a packaging sequence of the order in the package area and/or a package object.

In one embodiment of the invention, the method further comprises the step of:
- using the stored data in the database in at least one algorithm, said algorithm preferably being trained by machine learning for at least one of:
   - optimizing the positioning of the food item on the storage area,
   - optimizing the gripping of the food item,
   - optimizing the packaging sequence of the order in the package area and/or a package object.

The embodiment is particularly, but not exclusively, advantageous for obtaining a method wherein the performance is optimized at any step taken for any order performed.

In a third aspect, the invention further relates to a computer program comprising instructions which, when the program is executed by a computer, cause the computer to carry out at least the gripping and sorting step.

The first, second and third aspect of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### DESCRIPTION OF THE DRAWING

Figure 1 illustrates a 3D drawing of the food handling system.
Figure 2 illustrates the food handling system from above.
Figure 3 illustrates a robotic arm packing a food item.

### DETAILED DESCRIPTION OF THE INVENTION

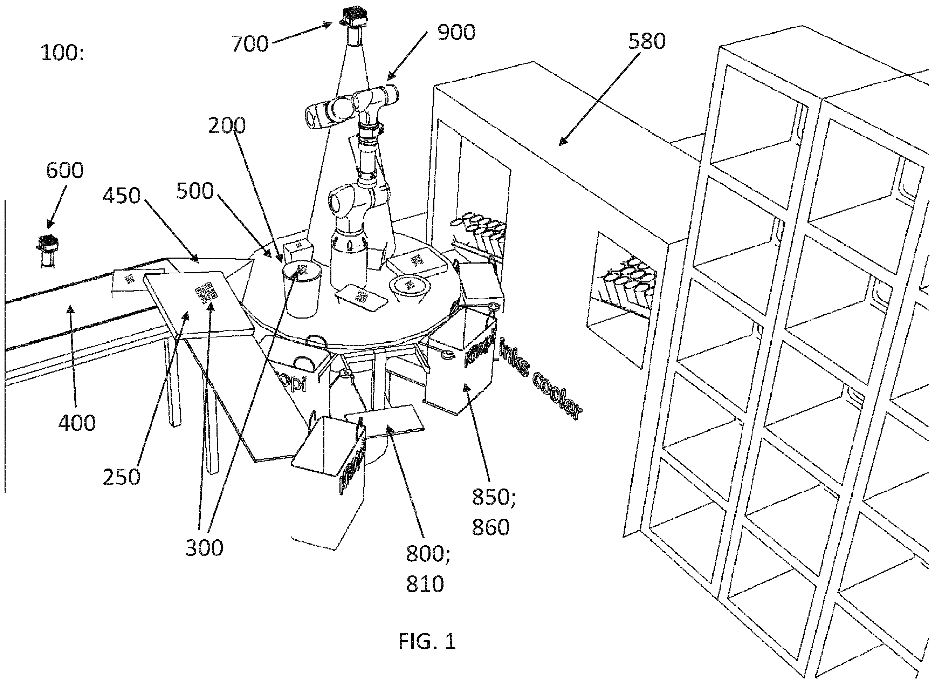

FIG. 1 illustrates a 3D drawing of the food handling system 100.

The system of the invention for handling one or more associated food item(s) 200 with an associated ID 300, such as a packaging comprising food, said system comprising:
- a reader, such as a scanner, configured for reading the ID 300 of the food item 200 (not shown),
- a conveyor 400, preferably a plurality of conveyors, for transporting the associated food 200 item to a temporary storage area 500, the conveyor in FIG. 1 comprises a slide 450 positioned at the end of the conveyor 400 towards the storage area 500 for guiding the associated food item 200 to the storage area.
- a temporary storage area 500, in FIG. 1 the area is a rotatable table being circular 500,
- a sensor 600, positioned at an arbitrary position along the conveyor 400, in FIG. 1 the sensor is a photocell 600,
- a vision system 700, such as a vision camara, for capturing information from the storage area 500,
- a package area 800, such as a tray 810, and/or or a package object 850, such as a bag 860,
- a robotic arm 900 for repositioning the food item 200 from the storage area 500 to the package area 800 and/or the package object 850,
- a control system, for controlling the robotic arm based on input from at least the vision system 700 (not shown).

The information represented in the ID 300 is being at least:
- height, width, and length of the associated food item 200, and/or
- an indication of an order number of the associated food item 200.

Further, FIG. 1 illustrates a big food item 250 that is an oversized item 250 relative to the package area 800 or package bag 850, preferably said oversized food item 250 is handled manually.

The oversized food item 250 may be sorted out before entering the temporary storage area 500, or the oversized food item 250 may enter the storage area 500 and then be sorted out from the storage area.

The oversized food item 250 can be handled by the robotic arm 900 but is preferably handled manually.

Moreover, FIG. 1 illustrates a system 100 comprising a separate area 580 for cold food items, such as beverages, dressings, ice cream, and wherein the at least one robotic arm 900 is configured for gripping the cold food item, and preferably the separate area 580 also comprises extra items, such as disposable cutlery.

Also, FIG. 1 illustrates a vision system 700 focusing on part of the temporary storage area 500.

When a food item 200 enters the storage area 500 from the conveyor 400, it is detected by the vision system 700. If the storage area 500 is rotating, such as a rotating table, it is registered how much the table rotates via signals from the table, such that the system registers the movement of the item 200, and such that the robotic arm 900 can easily be controlled according to where on the storage area 500 it must grip for the item 200. The robotic arm 900 provides the opportunity to automatically reposition the food item 200 from a storage area 500 to the package area 800 and/or the package object 850 and automatically collect and sort the food item 200 into a finished order.

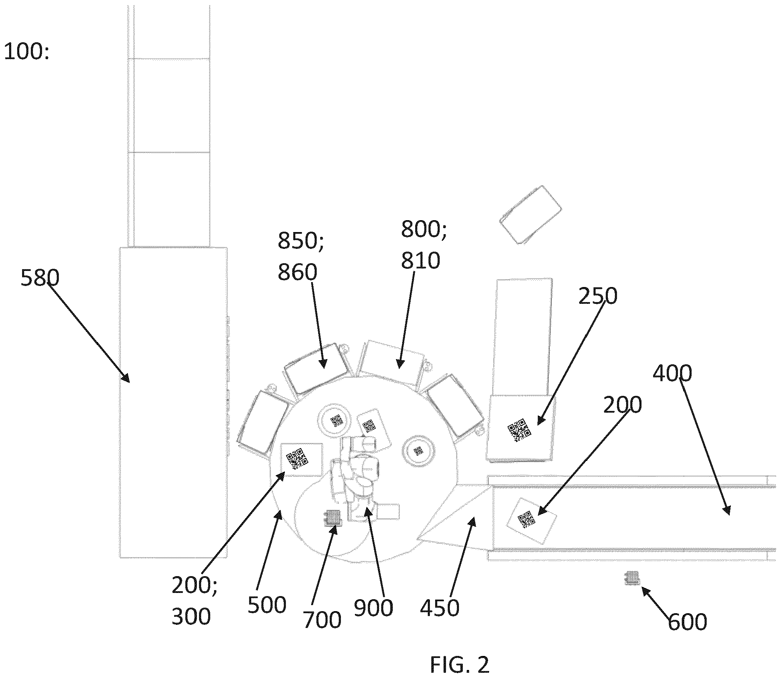

FIG. 2 illustrates a food handling system 100 from above, the illustrated system is corresponding to the system illustrated in FIG. 1.

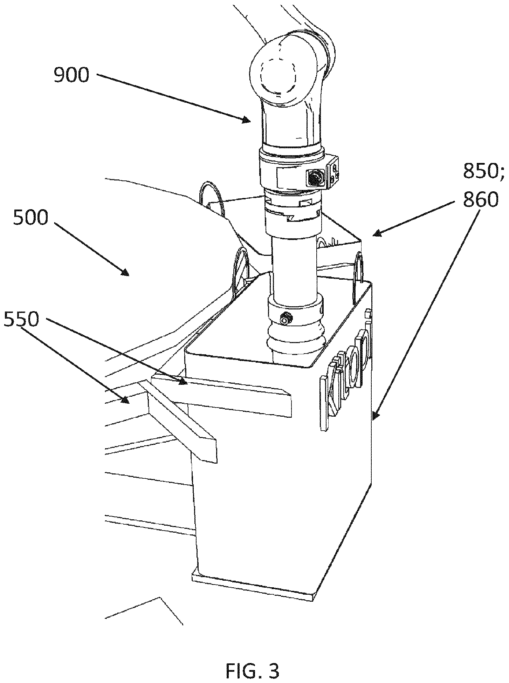

FIG. 3 illustrates a robotic arm 900 packing a food item 200.

As is seen from FIG. 3, the robotic arm 900 is designed to fit into the bag.

Also, it is illustrated that the package area 850, such as a bag 860 as in FIG. 3, is attached to the temporary storage area 500 by two brackets 550.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is possible and advantageous.

## Claims

1. A system (100) for handling one or more associated food item(s) (200), such as a packaging comprising food, with an associated ID (300), said system comprising:
- a reader, such as a scanner, configured for reading the ID of the food item,
- a conveyor (400), preferably a plurality of conveyors, for transporting the associated food item to a temporary storage area (500),
- a temporary storage area (500), preferably being a rotatable table, preferably circular,
- a sensor (600), preferably positioned at an arbitrary position along the conveyor (400), such as a photocell,
- a vision system (700), such as a vision camara, for capturing information from the storage area (500),
- a package area (800), such as a tray (810), and/or or a package object (850), such as a bag (860),
- a robotic arm (900) for repositioning the food item (200) from the storage area (500) to the package area (800) and/or the package object (850),
- a control system, for controlling the robotic arm (900) based on input from at least the vision system (700).

2. A system (100) according to claim 1, wherein the system further comprises a cooking area for preparing the one or more associated food items (200).

3. A system (100) according to any of the preceding claims, wherein information represented in the ID (300) is at least:
- height, width, and length of the associated food item (200), and/or
- an indication of an order number of the associated food item (200).

4. A system (100) according to any of the preceding claims, wherein the vision system (700), when in use, is configured for capturing information on at least:
- the ID (300) of the associated food item (200),
- the gripping position of the associated food (200) item on the storage area (500).

5. A system (100) according to any of the preceding claims, wherein the sensor (600), when in use, is providing:
- information on at least the width and length of the food item (200), and
- a control signal based on the width and length for controlling the position of the food item (200) on the temporary storage area (500).

6. A system (100) according to any of the preceding claims, wherein the system further comprises a database, and wherein the data stored in the database is provided from at least one of, preferably all of:
- the scanner,
- the sensor (600), and/or
- the vision system (700).

7. A system (100) according to any of the preceding claims, wherein one or more food items (200) are sorted into one gathered order at a package area (800) or in a package object (850), wherein the ID (300) of the food item(s) provides the information on when an order is completed.

8. A system (100) according to any of the preceding claims, wherein the system comprises an algorithm adapted to provide at least:
- a position command for positioning the food item (200) on the storage area (500) based on a control signal of the sensor (600), and/or
- a sorting command of the associated food item (200) based on order information from the ID (300).

9. A system (100) according to claim 7, wherein the algorithm is a machine learning algorithm adapted to be trained from the collected data of the database.

10. A method for handling one or more food item(s), preferably in a system (100) according to claims 1-9, said method comprising the steps of:
- receiving an order for one or more food item(s) (200),
- providing an order number for the order,
- scanning an ID (300) of the food item (200), such as a bar code, a matrix code, a QR code, Radio Frequency ID, and providing information from the ID being at least:
- height, width, and length of the food item, and/or
- an indication of an order number of the food item,
- linking the information to the food item (200), such as providing a label on the food item,
- positioning the food item (200) on a conveyor (400) for transporting the food item,
- providing the dimensions of width and length of the food item (200) from a sensor (600),
- providing a control signal based on information from the sensor (600), such as the width and length of the food item (200),
- rotating a temporary storage area (500), preferably being a rotatable table,
- positioning the food item (200) on the storage area (500),
- reading the ID (300) of the associated food item (200) by a vision system (700),
- providing the gripping position of the associated food item on the storage area (500) by a vision system (700),
- gripping the food items (200) from the storage area (500), preferably by a robotic arm (900),
- sorting the food items (200) into a package area (800) and/or a package object (850),
- completing the order by sorting all of the one or more food items (200) received in the order into a package area (800) and/or a package object (850).

11. A method for handling one or more food item(s) according to claim 10, wherein the method further comprises the step of:
- storing information provided by the scanning in a database,
- storing information provided by the sensor (600) in a database, and/or
- storing information provided by the vision system (700) in a database.

12. A method for handling one or more food item(s) according to claims 10-11, wherein an algorithm is provided in a control system for:
- determining a position of the food item (200) on the storage area (500),
- determining a gripping approach for the robotic arm (900) of the food item (200), and/or
- determining a packaging sequence of the food item(s) (200) in the order in the package area (800) and/or a package object (850).

13. A method for handling one or more food item(s) according to claims 11-12, wherein the method further comprises the step of:
- using the stored data in the database in at least one algorithm, said algorithm preferably being trained by machine learning for at least one of:
- optimizing the positioning of the food item (200) on the storage area (500),
- optimizing the gripping by a robotic arm (900) of the food item (200),
- optimizing the packaging sequence of the food item(s) (200) in an order in the package area (800) and/or a package object (850).

14. A method for handling one or more food item(s) according to claims 12-13, wherein the method further comprises the steps:
- preparing a food product in at least one cooking area,
- packing the prepared food product into food packaging.

15. A computer program, comprising instructions which, when the program is executed by a computer, cause the computer to carry out at least the gripping and sorting step of the method of claim 10.
